Europäisches Patentamt

European Patent Office

Office européen des brevets

(19)

(11) Numéro de publication: **0 024 992**
**B1**

(12)                    **FASCICULE DE BREVET EUROPEEN**

(45) Date de publication du fascicule du brevet: **27.06.84**

(51) Int. Cl.³: **A 47 J 43/046,**
A 47 J 42/56, B 26 D 7/24

(21) Numéro de dépôt: **80401224.3**

(22) Date de dépôt: **27.08.80**

(54) **Dispositif de sécurité de montage pour un appareil de préparation d'aliments.**

(30) Priorité: **29.08.79 FR 7921651**
**19.12.79 FR 7931062**
**24.03.80 FR 8006490**
**31.07.80 FR 8016882**

(43) Date de publication de la demande:
**11.03.81 Bulletin 81/10**

(45) Mention de la délivrance du brevet:
**27.06.84 Bulletin 84/26**

(84) Etats contractants désignés:
**AT BE CH DE GB IT LI LU NL SE**

(56) Documents cités:
**DE - B - 1 111 348**
**DE - B - 1 198 316**
**FR - A - 2 147 361**
**US - A - 2 740 019**
**US - A - 3 612 126**

(73) Titulaire: **ROBOT-COUPE**
**82-84 Boulevard des Batignolles**
**F-75017 Paris (FR)**

(72) Inventeur: **Coggiola, Marcel Eugène**
**32 Avenue du Général de Gaulle**
**F-94170 Le Perreux (FR)**
Inventeur: **Ribassin, Patrick Guy Georges**
**5 Rue Edouard Vaillant**
**F-94120 Fontenay-sous-Bois (FR)**
Inventeur: **Gallardo, Manuel Antoine Raymond**
**11 Rue du Temple**
**F-77500 Chelles (FR)**
Inventeur: **Meyer, Jean**
**8 rue des Fossettes**
**F-14128 Cormelles-le-Royal (FR)**
Inventeur: **Bertin, Alain Jean Luc**
**2 Place de la République**
**F-77500 Chelles (FR)**

(74) Mandataire: **Viard, Jean**
**Cabinet VIARD 28 bis, avenue Mozart**
**F-75016 Paris (FR)**

Courier Press, Leamington Spa, England.

## Description

La présente invention a pour objet un dispositif de sécurité de montage destiné en particulier, mais non-exclusivement, à un appareil coupeur-mélangeur du type robot de cuisine, ainsi que les appareils munis d'un tel dispositif. Un appareil de ce type est connu par le brevet français 2 147 361. Cet appareil comprend un socle à l'intérieur duquel est monté un moteur électrique dont l'arbre émerge verticalement à partir du socle et sur lequel peuvent être assujettis différents outils tels que couteaux, râpes etc. Ces outils tournent à l'intérieur d'une cuve, dont le fond est traversé par l'arbre moteur, montée d'une manière amovible sur le socle par un montage à baïonnette. Sur la cuve peut être verrouillé un couvercle, éventuellement surmonté par une goulotte d'introduction des produits, destiné à éviter les projections.

De tels appareils doivent être munis d'un dispositif de sécurité. Leur principal danger provient de ce que les outils sont entraînés à grande vitesse à l'intérieur de la cuve. Tout contact avec un outil en rotation doit' être rendu impossible. Cette nécessité est d'autant plus impérieuse que ces appareils sont généralement utilisés par des personnes sans formation particulière. Afin d'éviter les risques de blessures, le dispositif de sécurité doit répondre à deux conditions: le moteur ne doit être mis en marche que si le montage des éléments (cuve et couvercle) est convenable. La première condition est le montage correct de la cuve, c'est à dire qu'il doit être impossible de mettre le moteur en marche lorsque, la cuve étant absente, un outil est monté sur l'arbre moteur.

Une sécurité de ce genre est prévue, dans un autre domaine, dans le brevet américain 2 740 019. Un interrupteur magnétique est monté à la partie supérieure d'une poignée alors qu'un aimant permanent vient surplomber ledit interrupteur lorsque la poignée d'un récipient supérieur vient au-dessus de la poignée du récipient inférieur renfermant l'interrupteur.

Ainsi, le chauffage de l'eau nécessaire à la préparation du café ne peut intervenir que lorsque le récipient supérieur est en place.

Dans un appareil de préparation d'aliments, il est en outre indispensable que le couvercle soit verrouillé sur la cuve. Même si celle-ci est convenablement montée, le passage de la main dans la cuve pourrait provoquer des blessures.

La présence et le verrouillage du couvercle évitent ce risque.

Le dispositif de sécurité de montage doit donc prendre en compte cette information.

Dans le brevet français 2 147 361 précité cette double sécurité est assurée de la manière suivante. Un canal s'étend le long d'une génératrice de la cuve, canal à l'intérieur duquel est montée une tige-poussoir coulissante. Le déplacement vers le bas de la tige-poussoir est commandé par une came, portée par le couvercle, en contact avec l'extrêmité supérieure de la tige poussoir. Ce déplacement provoque la portée de l'extrêmité inférieure de la tige-poussoir contre un interrupteur monté dans le circuit d'alimentation du moteur, après passage par un trou prévu dans la surface supérieure du socle. Les conditions mentionnées ci-dessus sont donc bien remplies puisque la tige-poussoir ne peut pénetrer dans le socle que si le canal est en face du trou, ce qui correspond à la position verrouillée de la cuve sur le socle et que si la came appuie sur l'extrêmité supérieure de la tige-poussoir, ce qui implique le verrouillage du couvercle sur la cuve.

Un tel dispositif ne peut toutefois être considéré comme parfaitement fiable. Il est possible de mettre le moteur en marche, en l'absence de la cuve, en introduisant un objet pointu dans le trou apparaissant à la partie supérieure du socle. Lorsque la cuve est en place sur le socle, il est également possible de mettre le moteur en marche, alors que le couvercle n'est pas verrouillé sur la cuve. Il suffit d'appuyer sur l'extrêmité supérieure de la tige-poussoir. Enfin, la présence de la tige-poussoir qui n'est pas à l'abri de la poussière pose des problèmes d'entretien.

La présente invention a pour objet de remédier à ces inconvénients et de permettre la réalisation d'appareils présentant une fiabilité quasiment parfaite au regard de la sécurité.

Selon la présente invention, le dispositif de sécurité de montage, pour un appareil de préparation des aliments du type comprenant un socle incluant un moteur électrique dont l'arbre émerge du socle, différents outils pouvant être montés sur ledit arbre à l'intérieur d'une cuve fixée sur le socle d'une manière amovible et portant à sa partie supérieure des moyens de verrouillage pour un couvercle, un canal s'étendant le long d'une génératrice de la cuve et un contacteur disposé dans le socle au dessous du canal caractérisé en ce que le dit contacteur est connecté en série dans le circuit d'alimentation du moteur et en ce que le dit dispositif comporte en outre au moins un contacteur à commande magnétique commandé par le flux magnétique d'un aimant permanent fixé sur l'appareil au-dessus du socle de sortie que le circuit d'alimentation du moteur ne soit fermé que lorsque la cuve est verrouillée sur le socle et que le couvercle est verrouillée sur la cuve, le dit contacteur disposé au-dessous du canal pouvant être l'un des contacteurs à commande magnétique.

Alors que dans le brevet français précité la tige-poussoir assurait, en pénétrant dans le socle, la transmission mécanique de l'information de verrouillage du couvercle, validant ainsi la mise en marche du moteur, cette information est transmise selon la présente invention par le flux magnétique d'un aimant, flux qui n'est appliqué sur le contact de travail que lorsque tous les éléments sont convenablement verrouillés. Il en résulte un avantage immédiat. Il n'est plus nécessaire de prévoir un trou dans le socle lorsque celui-ci est moulé dans une matière plastique. Ainsi, la position du contacteur à commande magnétique sur le pourtour du socle n'est plus visible comme l'est nécessairement le trou. Par ailleurs, le dispositif de sécurité ne peut être mis hors service que si l'on est en possession d'un aimant, ce qui réduit très notablement les risques de mise en marche frauduleuse du moteur.

D'autres caractéristiques et avantages de l'invention apparaîtront au cours de la description qui va suivre de modes de réalisation particuliers, donnée en regard des figures qui représentent:

la figure 1, une vue schématique, en coupe partielle par un plan vertical, d'un appareil culinaire à outil rotatif, équipé de deux dispositifs de sécurité, l'un de type mécanique et l'autre de type magnétique selon l'invention;

les figures 2 et 3 les deux positions d'un dispositif de sécurité selon l'invention, monté sur un appareil de même type que celui représenté sur la figure 1;

la figure 4 une vue en coupe par un plan vertical d'un appareil dans lequel l'aimant est disposé sur le couvercle;

la figure 5, une vue en coupe verticale d'un appareil dans dans lequel la mise en marche est validée par un poussoir;

la figure 6, un mode de réalisation analogue à celui de la figure 5, également en coupe verticale;

la figure 7, une vue par dessus de l'appareil représenté sur la figure 5;

la figure 8 une coupe verticale d'un poussoir;

les figures 9 et 10, les deux positions d'un dispositif selon l'invention, faisant appel au déplacement vertical d'une tige;

la figure 11, une vue du couvercle destiné à être monté sur un appareil avec le dispositif représenté sur les figures 12 et 13;

les figures 12 et 13, les deux positions (travail et repos) d'un autre dispositif selon l'invention.

Sur l'ensemble des figures, les mêmes références désignent les mêmes éléments.

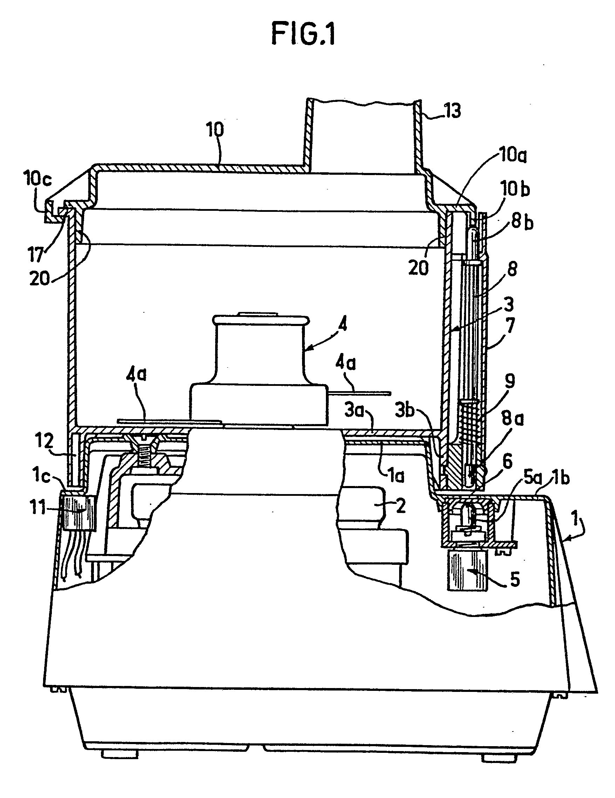

Sur la figure 1, le socle creux I est, par exemple, en matière plastique moulée. Il renferme un moteur électrique 2 qui est monté de manière à ce que son axe soit vertical et traverse la surface supérieure 1a du socle. Cette paroi 1a pourrait également être traversée par l'arbre vertical de sortie d'un réducteur de vitesse dont l'arbre d'entrée serait accouplé à l'arbre de sortie du moteur 2 qui, dans ce cas, serait disposé parallèlement à la cuve. Une cuve amovible 3, de forme cylindrique par exemple, a un fond 3a percé pour laisser le passage, lorsqu'elle est montée sur le socle 1, (comme sur la figure 1) à l'extrémité de l'arbre du moteur 2 ou de l'arbre de sortie du réducteur de vitesse éventuel. Un outil 4, comportant des couteaux radiaux 4a, peut être accouplé par tout moyen approprié sur l'extrêmité de l'arbre, à l'intérieur de la cuve 3 montée sur le socle 1. Cet appareil culinaire à outil rotatif, de type connu, est muni d'un dispositif de sécurité à actionnement mécanique connu par le brevet français précité. Ce dispositif comprend essentiellement un contacteur de travail 5 du type à bouton poussoir 5a qui est fixé à l'intérieur du socle 1, au-dessous d'un trou 6 pratiqué dans un plan horizontal 1b du socle ou carter 1, disposé en dessous d'une jupe cylindrique 3b qui prolonge vers le bas le fond 3a de la cuve 3. Le trou 6 est disposé de manière à se trouver exactement au-dessous d'un canal 7 aménagé sur une génératrice de la cuve 3. Ce canal 7 qui, de préférence, vient de moulage avec la cuve 3 est destiné à recevoir une tige-poussoir 8, de préférence en matière électriquement isolante. Un ressort 9, prenant appui sur le fond du canal 7 et sur une partie médiane de la tige 8 tend à pousser celle-ci dans la position supérieure représentée sur la figure 1, dans laquelle une autre collerette solidaire de la partie supérieure de la tige 8, vient en butée contre l'extrêmitè supérieure du canal 7. La tige 8 est, d'autre part, prolongée à son extrêmité inférieure par un organe cylindrique d'actionnement 8a qui peut s'engager dans le trou 6 pour actionner le poussoir 5a de l'interrupteur 5. L'extrêmité supérieure de la tige 8 est prolongée par un organe d'actionnement 8b qui peut coopérer avec une rampe 10b formant came, aménagée dans une direction sensiblement périphérique sur un rebord ou saillie externe 10a venue de moulage avec le couvercle 10 ou fixée sur ledit couvercle par tout moyen approprié. La came 10b est aménagée de sortie que, lorsque le couvercle 10 est amené par pivotement de la jupe 20 dans une position déterminée qui correspond au verrouillage du couvercle 10 sur la cuve 3, elle exerce sur la tige-poussoir 8 une poussée vers le bas qui comprime le ressort 9 et permet à l'organe d'actionnement inférieur 8a de s'engager dans le trou 6 et d'agir ainsi sur le contacteur 5.

Selon la présente invention un autre contacteur de travail 11 est monté à l'intérieur du socle 1, en dessous d'une partie plane 1c, par exemple diamètralement opposée à la partie 1b et sensiblement au même niveau de façon à passer au dessous de la jupe cylindrique 3b de la cuve 3. A cette jupe 3b est assujetti un aimant permanent 12, par exemple en ferrite, dans une position telle qu'il se trouve exactement au-dessus du contacteur à commande magnétique 11 de manière à actionner ce dernier lorsque la cuve 3 est montée sur le socle 1 dans une position telle que la tige 8 se trouve exactement au-dessus du trou 6.

Selon une autre caractéristique de l'invention, le contacteur magnétique 11 et le contacteur à commande mécanique 5 sont connectés en série dans le circuit d'alimentation (non représenté) du moteur 2.

Dans le cas de l'appareil culinaire représenté sur la figure 1, l'entraînement en rotation de l'outil 4 n'est possible que si, d'une part, la cuve 3 est montée sur le socle 1 de l'appareil avec une orientation correcte pour que le poussoir 8 et l'aimant 12 se trouvent respectivement au-dessus des contacteurs 5 et 11 et si, d'autre part, le couvercle 10 de la cuve 3 se trouve dans la position de fermeture correcte dans laquelle la came *10b* actionne le poussoir 8 de façon à actionner le contacteur 5. Cette position correspond par ailleurs à l'engagement d'un rebord *10c* du couvercle avec au moins un taquet 17 qui empêche tout mouvement en levée du couvercle. Si le couvercle n'est pas en place ou est mal fermé, le contacteur à commande mécanique ouvre le circuit et le moteur ne peut pas démarrer. Il en va de même si la cuve 3 n'est pas montée sur le socle puisqu'alors le circuit d'alimentation du moteur électrique est coupé au niveau du contacteur à commande magnétique 11. Dans ce dernier cas, un enfant par exemple a la possibilité de monter l'outil 4 sur le bout d'arbre émergeant de la paroi *1a* du socle et d'actionner le poussoir *5a* du contacteur 5 en introduisant un objet pointu dans le trou 6. Cette manoeuvre est toutefois insuffisante pour produire une mise en rotation dangereuse de l'outil 4 puisque le circuit d'alimentation du moteur 2 est coupé par le contacteur 11.

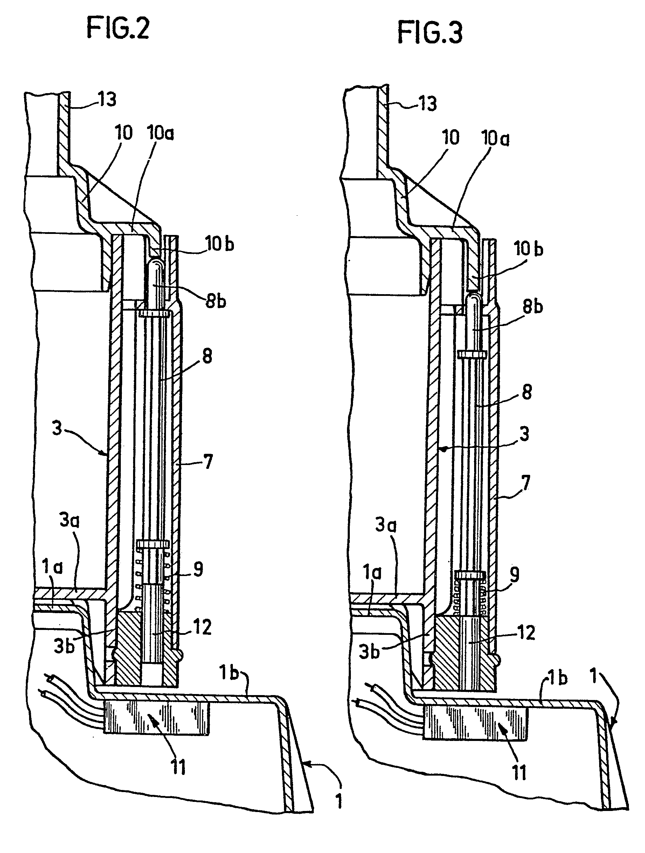

Les figures 2 et 3 représentent la partie supérieure droite de l'appareil de la figure 1, équipé d'un dispositif de sécurité unique à commande magnétique. Cette variante diffère seulement du mode de réalisation de la figure 1 par le fait qu'un contacteur à commande magnétique 11 est monté dans le socle 1 au-dessous du plan *1b* qui ne comporte aucun orifice.

Un aimant permanent 12 en forme de cylindre est fixé à l'extrêmité inférieure de la tige 8. Dans ce cas, le contacteur de travail unique 11 est inséré dans le circuit d'alimentation du moteur 2.

Lorsque la cuve 3 n'est pas montée sur le socle 1, le contacteur de travail 11 ne peut évidemment pas être actionné par l'aimant 12 solidaire de la cuve 3, si bien qu'aucune action mécanique sur le socle 1 ne peut faire démarrer le moteur. Il en va de même lorsque la cuve 3 est convenablement montée sur le socle mais que le couvercle 10 n'est pas ou mal fermé.

C'est seulement lorsque le couvercle 10 a été amené par rotation dans sa position correcte que la came *10b* exerce une force descendante sur la tige 8 par l'intermédiaire de la pièce supérieure d'actionnement *8b* de manière à comprimer le ressort 9 et à rapprocher l'aimant permanent 12 du contacteur 11 (figure 3). Alors seulement la fermeture du contacteur de travail 11 assure l'alimentation du moteur électrique et l'entraînement de l'outil 4.

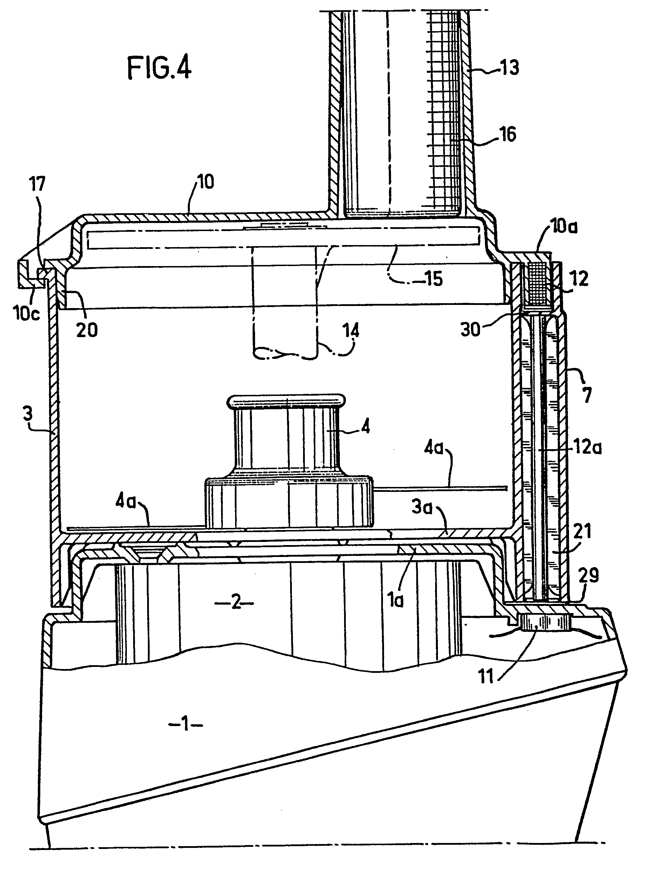

Un mode de réalisation légèrement différent est illustré sur la figure 4 qui est également une coupe d'un appareil de préparation des aliments coupé par un plan vertical. Le dispositif se compose comme précédemment d'un aimant permanent 12 et d'un contacteur à commande magnétique 11. Dans ce mode de réalisation l'aimant 12 est fixé sur le couvercle 10 par tout moyen approprié, et plus précisément à l'intérieur du rebord *10a* dudit couvercle. Selon une caractéristique de l'invention, le flux magnétique de commande est transmis de l'aimant 12 au contacteur 11 par une tige *12a* de matériau ferromagnétique tel que du fer doux ou de la ferrite par exemple, ladite tige étant montée dans le canal 7 et maintenue à l'intérieur de celui-ci. Sur la figure 4, l'appareil est en position de travail, c'est à dire que la rotation du couvercle 10 a provoqué d'une part l'engagement du rebord *10c* avec le taquet 17, (les mêmes moyens étant prévus au niveau du rebord *10a* mais n'apparaissant pas sur la coupe) et, d'autre part l'amenée de l'aimant permanent 12 au dessus de la tige *12a* qui est ainsi polarisée magnétiquement et transmet cette polarisation au contacteur 11 qui ferme le circuit d'alimentation du moteur 2. Par une rotation du couvercle, guidée par la jupe 20, qui contribue en outre à assurer l'étanchéité, les rebords *10a* et *10c* sont dégagés des taquets 17, ce qui déverrouille le couvercle 10 et l'aimant 12 est éloigné de la tige *12a*; le champ magnétique disparaît et le contacteur à command magnétique 11 s'ouvre ce qui provoque éventuellement l'arrêt du moteur et en tout cas inhibe toute mise en route accidentelle.

La tige ferromagnétique *12a* est noyée, à l'intérieur du canal 7 dans une matière plastique 21, par exemple et, le canal est obturé a ses extrêmités inférieure et supérieure par des parois 29 et 30 très minces, contre lesquelles viennent porter les extrêmités de la tige, afin de limiter les déperditions de flux. Un type d'outil autre que celui mentionné ci-dessus est représenté en trait mixte sur la figure 4. Il s'agit d'un disque râpe 15 qui peut être monté sur l'arbre du moteur 2 par l'intermédiaire d'un moyeu 14. Pour utiliser la râpe 15, les produits doivent être amenés contre le disque en rotation. Comme en soi connu, cette introduction est réalisée à l'aide d'une goulotte 13 à l'intérieur de laquelle peut être introduit un poussoir 16.

Le mode de réalisation représenté sur la figure 4 ne comporte pas de partie en mouvement lors de la fermeture et de l'ouverture de l'interrupteur 11. On notera que le dispositif est monté sur un appareil comprenant un socle 1 sur lequel un premier élément (cuve 3) est verrouillé dans une position déterminée, un second élément (couvercle 10) étant verrouillé sur le premier élément dans une position déterminée de sortie que l'aimant 12, l'axe du canal 7 et le contacteur à commande magnétique soient alignés, l'aimant étant dans ce cas solidaire du couvercle. Comme dans tous les modes de réalisation, le contacteur à commande magnétique est de préférence un contacteur du type dit I.L.S. encore connu sous le nom de relais REED, tel que ceux qui sont fabriqués par la Société R.T.C. LA RADIOTECHNIQECOMPELEC sous les références RI 22 3A, RI 22 AA ou RI 42.

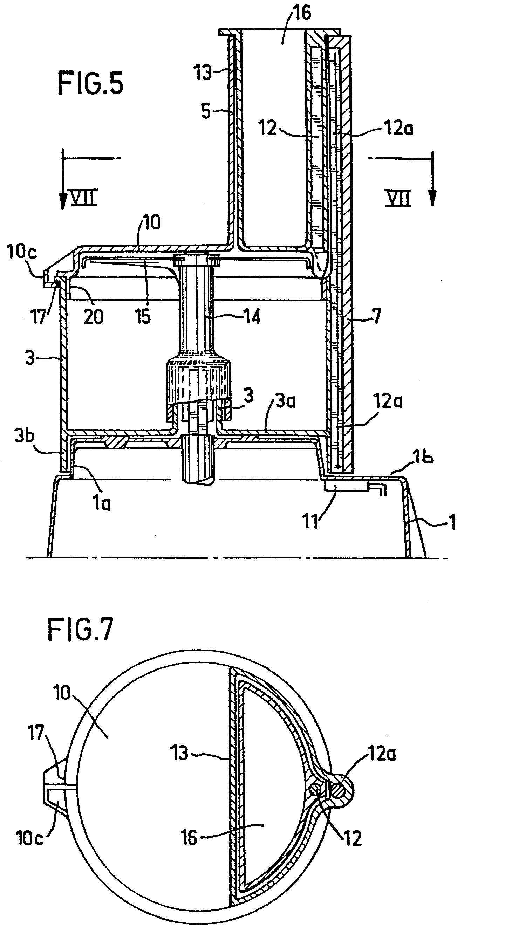

Les figures 5 à 8 illustrent un autre mode de réalisation dans lequel l'information de verrouillage est également transmise par une tige de matériau ferromagnétique, l'aimant permanent 12 étant dans ce cas fixé non plus sur le couvercle mais sur le poussoir 16 qui pénètre dans la goulotte 13.

La figure 5 est une vue en coupe par un plan vertical d'un appareil de préparation d'aliments ou robot de cuisine du type précédemment décrit. La Figure 7 est une vue par dessus du même appareil coupé selon la ligne VII—VII de la figure 5.

On retrouve sur la figure 5 le socle 1, la cuve 3, le couvercle 10 surmonté par la goulotte 13 d'introduction des produits à l'intérieur de laquelle se trouve le poussoir 16 qui permet de pousser les produits vers le bas, sans contact possible entre la main et l'outil 15. Comme précédemment, la cuve 3 peut être verrouillée sur le socle par un montage à baïonnette ou un pas de vis, par exemple, dans une position déterminée qui correspond à l'alignement du canal 7 avec le contacteur de commande 11 inclus dans le socle 1. Le couvercle 10 est lui même verrouillé sur la cuve 3 au moyen de taquets 17 venus de moulage sur la cuve, à la partie supérieure de celle-ci, au dessous desquels passent des rebords 10a et 10c formés dans le couvercle. Un taquet 17 apparaît sur la figure 7. Ce taquet et celui qui lui est diamètralement oppose (non représenté sur la figure 7) définissent une position de verrouillage déterminée du couvercle sur la cuve et par suite, une position déterminée du couvercle par rapport au socle.

Conformément à l'invention, la cuve 3 présente, le long d'une de ses génératrices un canal 7 à l'intérieur duquel est disposée une tige 12a de matériau ferromagnétique tel que du fer doux par exemple. L'extrêmité inférieure de la tige 12a se trouve lorsque la cuve est montée sur le socle, comme sur la figure 5, en regard de l'interrupteur magnétique 11 logé immédiatement au-dessous du plan 1b du socle 1. Dans le mode de réalisation représenté, le canal 7 s'étend au-dessus de la cuve 3 et sa hauteur est sensiblement égale à la somme des hauteurs de la cuve 3, du couvercle 10 et de la goulotte 13. Par ailleurs, le poussoir 16 est muni, le long de l'une de ses parois latérales, d'un aimant permanent à fort champ, par exemple de 4.000 Gauss.

Le principe de fonctionnement du dispositif découle immédiatement de sa structure. Lorsque le poussoir 16 est introduit dans la goulotte 13, l'aimant 12 arrive en regard de la tige 12a et la polarise par induction magnétique. La polarisation se transmet à la partie inférieure de la tige et agit sur le contacteur 11 pour le fermer et valider ainsi la mise en marche du moteur, dans le circuit d'alimentation duquel il est connecté. Comme celà apparait sur la figure 7, la commande du contacteur 11 ne peut se produire que lorsque l'aimant 12 est exactement en face de la tige, ce qui implique que le couvercle est varrouillé sur la cuve.

Il résulte de cette disposition un avantage considérable.

En effet, pour des raisons de sécurité, les dimensions des goulottes connues devaient être telles qu'il soit impossible d'y introduire la main, leur hauteur devant être supérieure à la longueur d'un doigt. Par suite, les goulottes étaient hautes et de section réduite ce qui posait des problèmes pour le râpage de certains légumes ou fruits qui devaient être au préalable découpés en petits volumes. Grâce à l'invention la section de la goulotte peut être agrandie autant que nécessaire puisque c'est le poussoir lui-même qui déclenche la mise en marche du moteur. Dans ces conditions, la main ou une partie de celle-ci ne peut venir au contact de l'outil tournant puisque le poussoir interdit son passage.

On voit sur la figure 7 que la section de la goulotte 13 a pu être considérablement agrandie. La tige 12a peut être protégée de toute action magnétique extérieure en disposant à l'intérieur du canal 7 un écran magnétique, par exemple en $\mu$-métal, sur toute sa périphérie sauf sur la région disposée en regard de l'aimant 12. Bien entendu, il est souhaitable que l'aimant 12 soit suffisamment puissant pour permettre le déclenchement du contacteur de travail dès l'introduction du poussoir dans la goulotte. De préférence, les surfaces de l'aimant et de la "tige" qui se trouvent en regard sont augmentées au maximum, afin d'accroître l'induction magnétique.

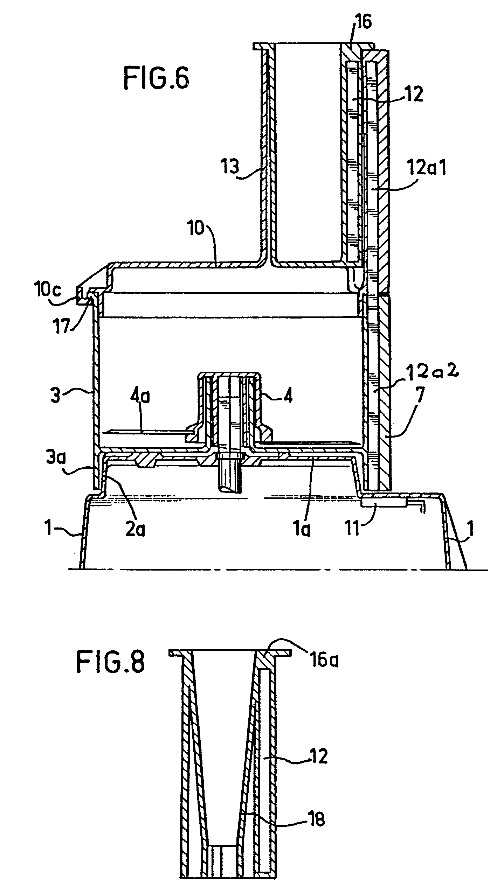

La figure 6 représente un autre mode de réalisation proche du précédent et dans lequel la tige 12a est séparée en deux parties respectivement 12a1 et 12a2 respectivement solidaires du couvercle 10 et de la cuve 3. Les deux parties de la tige peuvent être directement moulées ou être rapportées sur la cuve et le couvercle. Par un montage correct de la cuve 3 et du couvercle 10, les deux parties de tige 12a1 et 12a2 sont amenées dans le prolongement l'une de l'autre et la polarisation de 12a1 par l'aimant 12 provoque la polarisation de 12a2 et par là le changement d'état du contacteur 11.

Dans le cas de l'utilisation de couteaux, les ingrédients peuvent assez souvent être mis dans la cuve avant fermeture de celle-ci par le couvercle. La mise en marche peut alors être obtenue par introduction du poussoir dans la goulotte 13, la seule fonction du poussoir étant dans ce cas une fonction de sécurité. Il se peut toutefois que l'on doive introduire des produits au cours du fonctionnement de l'appareil san toutefois interrompre celui-ci. Il est alors possible d'utiliser un "poussoir" 16a toujours muni d'un aimant 12 mais dont l'intérieur présente une paroi formant entonnoir telle que la paroi 18 du poussoir 16a représenté sur la figure 8.

La paroi 18 est conçue de manière à permettre le passage des produits liquides ou pulvérulents tout en s'opposant au passage d'un doigt.

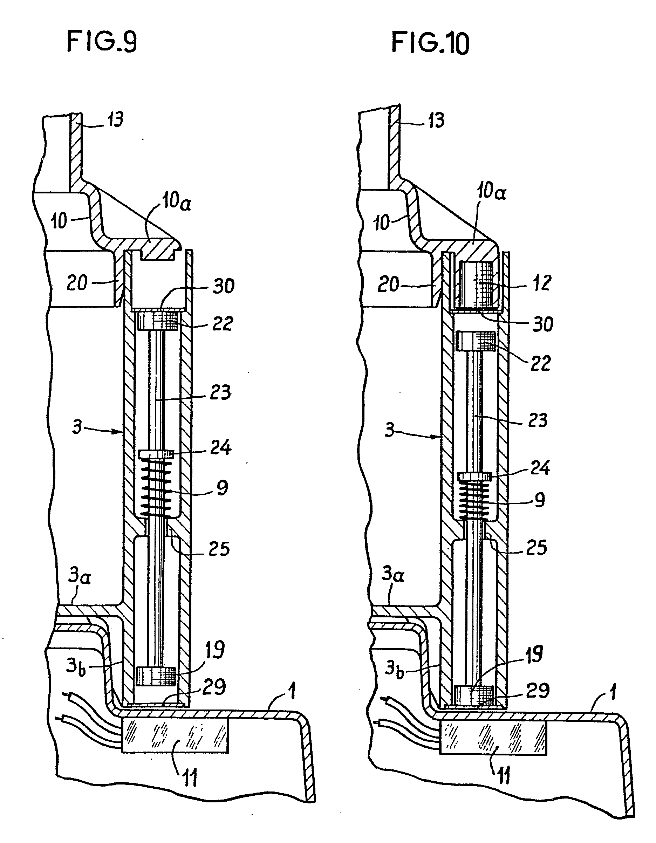

Lorsque les éléments constituant l'appareil sont de grande hauteur, la réluctance du circuit magnétique ainsi constitué croît avec celle-ci, compte tenu de la présence d'entrefers importants. Une solution consiste à employer des aimants plus puissants mais cette voie est limitée. La description qui va suivre a trait à des moyens permettant de pallier cet inconvénient. Les figures 9 et 10 représentent deux états d'un même dispositif de sécurité selon l'invention appliqué comme précédemment à un robot de cuisine dont seule une partie apparaît sur les dessins. Sur ces deux figures on reconnaît le socle 1, la cuve 3 et le couvercle 10 surmonté de la goulotte 13. Ces vues sont des coupes par un plan vertical passant par l'axe de la cuve et l'axe du canal 7. C'est ainsi que l'aimant permanent 12 n'apparaît pas sur la figure 9.

Comme dans le mode de réalisation de la figure 4, l'aimant 12 est solidaire du rebord 10a du couvercle 10. Cependant, on a disposé à l'intérieur du canal 7, positionné au dessus du contacteur à commande magnétique 11, un équipage mobile constitué par une tige 23 portant à ses deux extrêmités des aimants permanents respectivement 19 à l'extrèmité inférieure et 22 à l'extrèmité supérieure. Le canal 7 est obturé en bas et en haut par deux opercules 29 et 30 de faible épaisseur. La tige 23 est montée coulissante à l'intérieur du canal 7 par tout moyen approprié, entre les parois 29 et 30.

La partie médiane de la tige présente une collerette 24 sur laquelle vient porter une extrêmité d'un ressort de rappel 9 qui prend appui par ailleurs sur une couronne 25 formée à l'intérieur du canal 7. Selon une caractéristique de ce mode de réalisation, les polarités des pôles des aimants 12 et 22 placées en regard sont identiques. c'est à dire que si le pole Nord de l'aimant 12 est en bas de celui-ci, le pôle Nord de l'aimant 22 sera en haut de celui-ci ou vice-versa.

Le fonctionnement de ce dispositif est très simple: sur la figure 9 la cuve est verrouillée sur le socle mais le couvercle n'est pas verrouillé sur la cuve. l'aimant 12 n'exerce aucune action sur l'aimant 22. Le ressort 9 applique la face supérieure de l'aimant 22 contre la paroi 30. Par rotation du couvercle 10 sur la cuve 3, guidée par la jupe interne 20, le couvercle est verrouillé et l'aimant 12 est amené au-dessus du canal 7. Il se produit entre les aimants 12 et 22 une répulsion magnétique qui provoque la descente de la tige vers le bas. Comme celà est illustré sur la figure 10, ce mouvement comprime le ressort 9 et amène l'aimant 19 au contact de la paroi 29. L'entrefer entre l'aimant 19 et l'élément magnétique du contacteur est réduit et ce contacteur 11 change d'état de manière à fermer le circuit d'alimentation du moteur.

Dès que le couvercle est déverrouillé, le ressort qui avait été comprimé lors de la descente de la tige 23 se détend et ramène l'aimant 22 dans sa position supérieure, l'aimant 19 s'éloignant de l'interrupteur 11 ce qui ouvre le circuit d'alimentation du moteur. La couronne 25 peut servir de guide à ces mouvements et les aimants peuvent porter très legèrement sur les parois internes du canal 7.

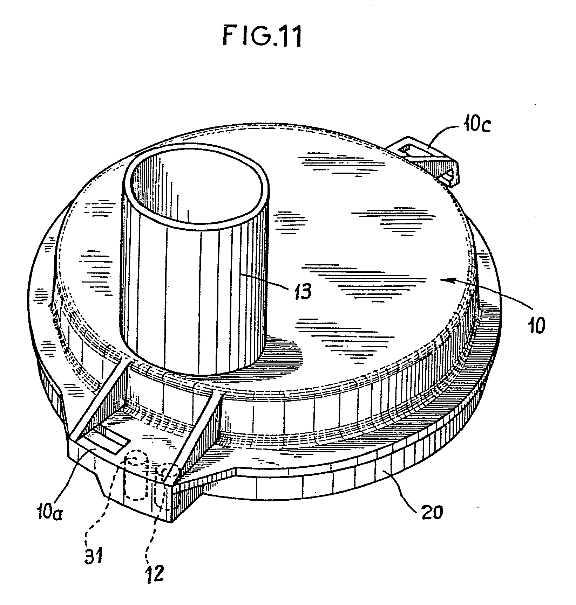

Un autre mode de réalisation est illustré par les figures 11 à 13. La figure 11 représente en perspective un couvercle 10 d'un appareil muni d'un dispositif de sécurité selon l'invention. On voit, à la périphérie de celui-ci, deux pattes ou rebords *10a* et *10c* diamètralement opposées. Ces rebords sont repliés en ''U'' de manière à venir envelopper des taquets portés par la cuve, par rotation du couvercle. Par ailleurs, le rebord *10a* porte deux aimants verticaux 12 et 31 dont les pôles sont tête-bêche, c'est à dire qui si le pôle Sud de l'aimant 12 est en bas, le pôle Sud de l'aimant 31 est en haut et vice-versa.

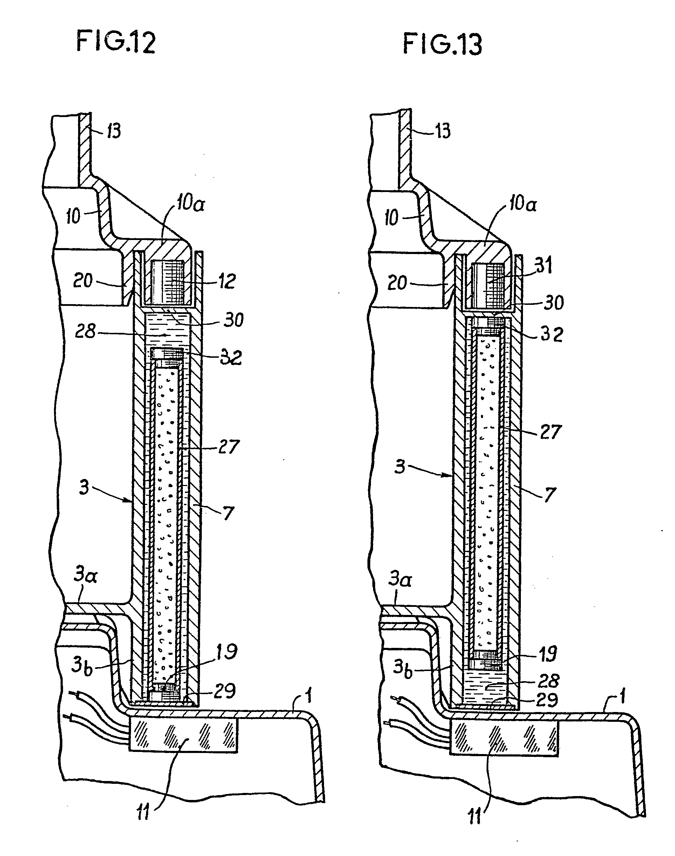

La figure 12 est une coupe partielle par un plan vertical passant par l'axe de la cuve 3 et par l'axe du canal 7.

Comme précédemment, le dispositif de sécurité comprend un contacteur à commande magnétique 11 inclus dans le socle 1, au-dessous du canal 7 lorsque la cuve est montée sur le socle. Toutefois, l'équipage mobile est dans ce cas constitué par un tube 27 rempli de gaz, tel que de l'air par exemple, et fermé à ses deux extrêmités par deux aimants permanents respectivement 19 en bas et 32 en haut. L'ensemble est immergé, à l'intérieur du canal 7 dans un liquide 28 tel que de l'huile par exemple, dont la densité est telle que le tube 27 se trouve sensiblement en équilibre indifférent, la poussée d'Archimède étant du même ordre de grandeur que le poids du tube. En se reportant à la figure 11, on voit qu'il existe deux positions du couvercle 10 qui correspondent à l'amenée soit de l'aimant 12, soit de l'aimant 31 au-dessus du canal 7. (figures 12 et 13). Sur la figure 12, le couvercle est en position de verrouillage et l'aimant 12 est au-dessus du canal 7. Les pôles des aimants 12 et 32 qui arrivent en regard sont de même nature et, par répulsion magnétique, le tube 27 est envoyé vers le bas, ce qui rapproche l'aimant 19 du contacteur 11 qui change d'état et ferme le circuit d'alimentation du moteur. Lorsque, après usage de l'appareil, on tourne le couvercle pour le déverrouiller et extraire les produits de la cuve, l'aimant 12 est remplacé au-dessus du canal par l'aimant 31 (figure 13). L'aimant 31 étant de polarité opposée à celle de l'aimant 12, il y a attraction magnétique entre les aimants 31 et 32. Cette attraction fait remonter le tube 27 ce qui éloigne l'aimant 19 du contacteur 11, coupe le circuit d'alimentation du moteur et inhibe toute mise en marche accidentelle de celui-ci. On notera que la rotation qui substitue l'aimant 31 à l'aimant 12 provoque également la libération des rebords *10a* et *10c* hors des taquets 17.

Dans le même ordre d'idées, il est également possible de ne prévoir dans le couvercle qu'un seul aimant à action répulsive. Dans ce cas toutefois, la densité du liquide 28 et/ou le poids tu tube doivent être tels que le tube 27 remonte par le seul jeu des pressions hydrostatiques et en absence de toute force magnétique vers le haut du canal, l'aimant du couvercle n'ayant pour but que de faire descendre le tube. La remontée du tube 27 coupe, comme précédemment le circuit d'alimentation du moteur, par interruption de la liaison magnétique 11—19.

La description des modes de réalisation avec équipage mobile portant deux aimants se rapportait au cas dans lequel l'aimant permanent 12 est porté par le couvercle proprement dit. Ce mode de réalisation peut, bien évidemment, être appliqué au cas où l'aimant 12 est porté par la goulotte ou le poussoir. Dans les exemples qui ont été donnés ci-dessus, on n'a fait mention que d'un seul relais, contacteur ou interrupteur à commande magnétique. Il est bien entendu possible, sans sortir du cadre de l'invention, de prévoir, afin d'accroître la sécurité, plus d'un contacteur dans le socle et, par exemple, un interrupteur de sécurité de couvercle et un interrupteur de sécurité de goulotte, un interrupteur de sécurité de position du cuve pouvant en outre être connecté en série dans le circuit d'alimentation du moteur.

**Revendications**

1. Dispositif de sécurité de montage pour un appareil de préparation des aliments du type comprenant un socle (1) incluant un moteur électrique (2) dont l'arbre émerge du socle (1), différents outils (4) pouvant être montés sur ledit arbre à l'intérieur d'une cuve (3) fixée sur le socle (1) d'une manière amovible et portant à sa partie supérieure des moyens (10c) de verrouillage pour un couvercle (10), un canal (7) s'étendant le long d'une génératrice de la cuve (3), et un contacteur (5, 11) disposé dans le socle au-dessous du canal (7), caractérise en ce que ledit contacteur (5, 11) est connecté en série dans le circuit d'alimentation du moteur (2), en ce que le dit dispositif comporte en outre au moins un contacteur à commande magnétique (11) commandé par le flux magnétique d'un aimant permanent (12) fixé sur l'appareil au-dessus du socle (1) de sortie que le circuit d'alimentation du moteur (2) ne soit fermé que lorsque la cuve (3) est verrouillée sur le socle (1) et que le couvercle (10) est verrouillé sur la cuve (3), le dit contacteur disposé au-dessous du canal (7) pouvant être l'un des contacteurs à commande magnétique (11).

2. Dispositif selon la revendication 1, une tige-poussoir (8) étant montée coulissante à l'intérieur du canal (7) sous l'influence d'une came (10b) portée par le couvercle (10) et d'un ressort de rappel (9), caractérisé en ce que l'aimant permanent (12) est fixé à la partie inférieure de la tige (8) de sortie que la position basse de l'aimant (12) corresponde d'une part à la fermeture du contacteur à commande magnétique (11) et, d'autre part au verrouillage du couvercle (10) sur la cuve (3).

3. Dispositif selon la revendication 1, caractérisé en ce que l'aimant permanent (12) est fixé à la périphérie du couvercle (10), une tige de matériau ferromagnétique (12a) étant disposée à l'intérieur du canal (7) et s'étendant sur toute la hauteur de celui-ci, l'aimant (12) venant au-dessus du canal (7) lorsque le couvercle (10) est verrouillé sur la cuve (3).

4. Dispositif selon la revendication 1, caractérisé en ce que deux aimants (19, 22; 19, 32) sont montés aux deux extrémités d'un équipage (23, 27) mobile à l'intérieur du canal (7), le couvercle (10) portant au moins un aimant (12) agissant par répulsion magnétique sur l'aimant supérieur (22, 32) de l'équipage mobile (23, 27).

5. Dispositif selon la revendication 4, caractérisé en ce qu'un second aimant (31) de polarité magnétique opposée à la polarité magnétique de l'aimant supérieur (22, 32) de l'équipage mobile (23, 27) est disposé sur le couvercle (10) à proximité de l'aimant (12) de manière à venir au-dessus du canal (7) lors de la rotation du couvercle (10) en vue de son déverrouillage.

6. Dispositif selon l'une des revendications 4 ou 5, caractérisé en ce que l'équipage mobile (27) est constitué par un tube creux, rempli de gaz, immergé à l'intérieur du canal (7) dans un liquide.

7. Dispositif selon la revendication 4, caractérisé en ce que l'équipage mobile (23) est constitué par une tige rappelée vers le haut par un ressort (9).

8. Dispositif selon la revendication 1, le couvercle (10) présentant une goulotte (13) pour l'introduction des produits, sous la pression d'un poussoir (16) caractérisé en ce qu'un aimant permanent (12) est porté par le poussoir (16), un circuit magnétique (12a) acheminant le flux induit par l'aimant (12) sur le contacteur à commande magnétique (11) disposé dans le socle (1).

9. Dispositif selon la revendication 8, caractérisé en ce que le circuit magnétique (12a) est constitué de deux tiges de matériau ferromagnétique (12a1, 12a2), solidaires respectivement du couvercle (10) et de la cuve (3), les deux tiges (12a1, 12a2) étant alignées entre elles et avec le contacteur à commande magnétique (11) si et seulement si, la cuve (3) est verrouillée sur le socle (1) et le couvercle (10) est verrouillé sur la cuve (3).

10. Dispositif selon l'une des revendications 8, ou 9, caractérisé en ce que la section droite du poussoir (16) et la section droite interne de la goulotte sont assymétriques de sortie que, lors de l'introduction du poussoir (16) dans la goulotte (13), l'aimant (12) vienne à proximité de la tige (12a).

11. Dispositif selon la revendication 10, caractérisé en ce que le poussoir (16) est creux et présente des parois intérieures formant entonnoir.

## Patentansprüche

1. Sicherheitsvorrichtung für das Zusammensetzen eines Gerätes zur Aufbereitung von Lebensmitteln, bestehend aus einem Sockel (1), der einen mit seiner Welle aus dem Sockel (1) herausragenden Elektromotor (2) einschließt, aus verschiedenen Werkzeugen (4), die auf der genannten Welle im Inneren eines Behälters (3) befestigt werden können, welcher auf dem Sockel (1) unbeweglich angebracht ist und an seinem oberen Teil Einrichtungen (10c) zur Verriegelung mit einem Deckel (10) trägt, aus einem Kanal (7), der sich am Mantel des Behälters (3) befindet, und aus einem Schalter (5, 11), der im Sockel (1) unter dem Kanal (7) angeordnet ist, dadurch gekennzeichnet, daß der Schalter (5, 11) zum Stromkreis des Motors (2) in Serie geschaltet ist, die Vorrichtung mindestens einen Magnetschalter (11) besitzt, der durch den magnetischen Fluß eines Permanentmagneten (12) betätigt wird, welcher auf dem Gerät über dem Sockel (1) so befestigt ist, daß der Stromkreis zum Motor (2) nur dann geschlossen ist, wenn der Behälter (3) mit dem Sockel (1) verriegelt ist und der Deckel (10) mit dem Behälter (3) verriegelt ist, wobei der unter dem Kanal (7) liegende Schalter einer der magnetisch gesteuerten Schalter (11) sein kann.

2. Vorrichtung nach Anspruch 1 mit einer Stoßstange (8), die unter dem Einfluß einer vom Deckel (10) getragenen Nocke (10b) und einer Rückführfeder (9) im Inneren des Kanals (7) gleitend angeordnet ist, dadurch gekennzeichnet, daß der Permanentmagnet (12) am unteren Teil der Stange (8) so befestigt ist, daß die untere Stellung des Magneten (12) dem Schließen des Magnetschalters (11) einerseits und der Verriegelung des Deckels (10) auf dem Behälter (3) andererseits entspricht.

3. Vorrichtung nach Anspruch 1, dadurch gekennzeichnet, daß der Permanentmagnet (12) am Umfang des Deckels (10) befestigt ist, eine Stange aus ferromagnetischem Material (12a) im Inneren des Kanals (7) angeordnet ist und sich über dessen ganze Höhe erstreckt, der Magnet (12) über den Kanal (7) zu liegen kommt, wenn der Deckel (10) mit dem Behälter (3) verriegelt wird.

4. Vorrichtung nach Anspruch 1, dadurch gekennzeichnet, daß zwei Magnete (19, 22; 19, 32) an den beiden Enden einer beweglichen Gruppe (23, 27) im Inneren des Kanals (7) angebracht sind, der Deckel (10) mindestens einen Magnet (12) trägt, der durch magnetische Abstoßung auf den Oberen Magnet (22, 32) der beweglichen Gruppen (23, 27) einwirkt.

5. Vorrichtung nach Anspruch 4, dadurch gekennzeichnet, daß ein zweiter Magnet (31), dessen Polarität entgegengesetzt ist zur Polarität des oberen Magneten (22, 32) der beweglichen Gruppe (23, 27), auf dem Deckel (10) neben dem Magneten (12) so angeordnet ist, daß bei der Entriegelung des Deckels (10) über den Kanal (7) zu liegen kommt.

6. Vorrichtung nach einem der Ansprüche 4 oder 5, dadurch gekennzeichnet, daß die bewegliche Gruppe (27) aus einem hohlen Rohr besteht, das mit Gas gefüllt ist und im Inneren des Kanals (7) in eine Flüssigkeit eintaucht.

7. Vorrichtung nach Anspruch 4, dadurch gekennzeichnet, daß die bewegliche Gruppe (23) aus einer Stange (8) besteht, die durch eine Feder (9) nach oben gedrückt wird.

8. Vorrichtung nach Anspruch 1, bei welcher der Deckel (10) einen Trichter (13) zum Einführen von Produkten unter dem Druck eines Stößels (16) aufweist, dadurch gekennzeichnet, daß ein Permanentmagnet (12) vom Stößel (16) getragen wird, wobei eine magnetische Leitung (12a) den vom Magneten (12) induzierten magnetischen Fluß an den im Sockel (1) liegenden Magnetschalter (11) weiterleitet.

9. Vorrichtung nach Anspruch 8, dadurch gekennzeichnet, daß die magnetische Leitung (12a) aus zwei Stangen aus ferromagnetischem Material (12a1, 12a2) besteht, die mit dem Deckel (10) bzw. mit dem Behälter (3) fest verbunden sind und untereinander und mit dem Magnetschalter (11) fluchten, wenn und nur wenn der Behälter (3) mit dem Sockel (1) und der Deckel (10) mit dem Behälter (3) verriegelt sind.

10. Vorrichtung nach einem der Ansprüche 8 oder 9, dadurch gekennzeichnet, daß der rechte Querschnitt des Stößels (16) und der innere rechte Querschnitt des Trichters (13) asymmetrisch sind, derart, daß bei der Einführung des Stößels (16) in den Trichter (13) der Magnet (12) in die Nähe der Stange (12a) kommt.

11. Vorrichtung nach Anspruch 10, dadurch gekennzeichnet, daß der Stößel (16) hohl ist und sich seine inneren Wände verengen.

## Claims

1. A device for safe assembly of apparatus for preparing food, the apparatus being of the type comprising a base (1) including an electric motor (2) whose shaft projects from the base (1), different tools (4) being mountable on said shaft inside a bowl (3) which is removably fixed to the base (1), the top of the bowl including locking means (10c) for a lid (10), a channel (7) extending along a generator line of the bowl (3), and a switch (5, 11) disposed in the base underneath the channel (7), characterized in that the said switch (5, 11) is connected in series in the power supply circuit for the motor (2), and in that the device further includes at least one magnetically controllable switch (11) controlled by the magnetic flux of a permanent magnet (12) which is fixed to the apparatus above the base (1) in such a manner that the power supply circuit of the motor (2) is closed only when the bowl (3) is locked to the base (1) and the lid (10) is locked to the bowl (3), the said switch (7) disposed underneath the channel being optionally one of the magnetically controlled switches (11).

2. A device according to claim 1, a push-rod being slidably mounted inside the channel (7) to be influenced by a cam (10b) on the lid (10) and by a return spring (9), characterized in that the permanent magnet (12) is fixed to the bottom of the rod (8) in such a manner that the low position of the magnet (12) corresponds both to the magnetically controlled switch (11) being closed and to the lid (10) being locked on the bowl (3).

3. A device according to claim 1, characterized in that the permanent magnet (12) is fixed to the periphery of the lid (10), a rod of ferromagnetic material (12a) being disposed inside the channel (7) and extending over the entire length thereof, the magnet (12) coming above the channel (7) when the lid (10) is locked to the bowl (3).

4. A device according to claim 1, characterized in that two magnets (19, 22; 19, 32) are mounted at the two ends of moving equipment (23, 27) movably mounted inside the channel (7), the lid (10) bearing at least one magnet (12) which acts by magnetic repulsion on the upper magnet (22, 32) of the moving equipment (23, 27).

5. A device according to claim 4, characterized in that a second magnet (31) of magnetic polarity opposite to the magnetic polarity of the upper magnet (22, 32) of the moving equipment (23, 27) is disposed on the lid close to the magnet (12) in such a manner as to come above the channel (7) when the lid (10) is rotated to be unlocked.

6. A device according to claim 4 or 5, characterized in that the moving equipment (27) is constituted by a hollow tube filled with gas and immersed inside the channel (7) in a liquid.

7. A device according to claim 4, characterized in that the moving equipment (23) is constituted by a rod urged upwardly by a spring (9).

8. A device according to claim 1, the lid (10) having a chute (13) for inserting products under the pressure of a pusher (16), characterized in that a permanent magnet (12) is carried by the pusher (16), a magnetic circuit conveying flux induced by the magnet (12) to the magnetically controlled switch (11) disposed in the base (1).

9. A device according to claim 8, characterized in that the magnetic circuit (12a) is constituted by two rods (12a1, 12a2) of ferromagnetic material which are fixed respectively to the cover (10) and to the bowl (3), the two rods (12a1, 12a2) being aligned with each other and with the magnetically controlled switch (11) if, and only if, the bowl (3) is locked to the base (1) and the lid (10) is locked to the bowl (3).

10. A device according to claim 8 or 9, characterized in that the right cross section of the pusher (16) and the right cross section of the bore of the chute are asymmetrical in such a manner that inserting the pusher (16) into the chute (13) brings the magnet (12) close to the rod (12a).

11. A device according to claim 10, characterized in that the pusher (16) is hollow and has inside walls forming a funnel.

# FIG.1

**0 024 992**

FIG.2

FIG.3

2

FIG.4

FIG.5

FIG.7

FIG.6

FIG.8

# FIG.9

# FIG.10

# FIG.11

0 024 992

FIG.12

FIG.13